# EUROPEAN PATENT APPLICATION

(11) **EP 1 408 565 A1**
(43) Date of publication of application: **14.04.2004**
(21) Application number: 03255520.3
(22) Date of filing: 04.09.2003
(51) Int. Cl.: H01M 4/02, H01M 6/44

(54) **An improved battery cell and batteries including same**

(30) Priority: 05.09.2002 CN 21006559
(71) Applicant: Whitehill Electrochemical Co. Ltd., Kwai Chung, New Territories (HK)
(72) Inventor: Lu, Tse Wan, New Territories Hong Kong (CN); Law, Chung Yuen, New Territories Hong Kong (CN); Chak, Yik Pang, New Territories Hong Kong (CN)
(74) Representative: Marles, Alan David

(57) **Abstract**

A battery unit cell with improved conductive sealing by shielding the positive tablet electrode with a conductive polymeric sheet such as a thermoplastic rubber sheet dispersed with acetylene black. This improved sealing alleviates the adverse loss of moisture from the battery unit cell and enhances the shelf- or storage- life of batteries with cells with such improved sealing means or methods.

## Description

### FIELD OF THE INVENTION

The present invention relates to dry batteries and battery c ells and, more particularly, to battery cells with improved sealing. This invention also relates to batteries including a plurality of stacked together cell units. More specifically, this invention relates to batteries or battery cells having a tablet-shaped positive electrode containing a manganese dioxide composition and a negative electrode containing zinc.

### BACKGROUND OF THE INVENTION

A battery cell or a unit cell is the basic unit of a battery. In order to provide a sufficient battery voltage, dry-cell batteries may c ontain a plurality of dry-cell units which are stacked together and connected in series. Each individual cell unit generally includes a first or positive electrode, a second or negative electrode, a separator and a supporting electrolyte which are all held together by a receptacle or sub-casing. The battery cell or the plurality of stacked together battery cells are generally enclosed within an outer housing so that the battery cell is shielded from the external environment and to avoid leakage of electrolyte. Batteries formed with a plurality of stacked together cell units usually include cell units having a multi-layered tablet structure. This multi-layered structure usually includes a first layer of a positive electrode composition, a second layer of a separator or electrolyte composition, and a third layer of a negative electrode composition.

The positive electrode composition may contain a positive active material, an electro-conductive material and a binding agent. The positive active material may be, for example, oxidizing agents such as manganese dioxide, nickel oxide, lead dioxide, and the like. The electro-conductive material may be, for example, acetylene black, graphite, carbon black, nickel powder, and the like. The binding agent is generally added to the positive electrode composition to improve the binding integrity or strength of the positive active material. Common binding agents include, for example, carboxymethylcellulose, polytetrafluoroethylene, salts of carboxymethylcellulose, polyvinyl alcohol, polyethylene, agar, methylcellulose, and the like.

The separator can be composed of an electrolyte-supporting material which can be any kind of material with electrical insulating properties. The electrolyte can be an aqueous acid solution, an alkaline solution or a solid electrolyte which supports ion conductivity. The negative electrode may be a negative active material such as zinc and other negative active compositions. A cell unit having the multi-layered tablet structure is then mounted within an outer housing to shield the unit cell from the external environment in order to prevent loss of moisture, especially from the electrolyte, or the ingress of oxygen into the cell.

In general, the shelf life of a dry-cell battery is largely affected by the sealing quality of the dry-battery unit cells. Satisfactory sealing of the battery must fulfil the requirements that sufficient and low-ohmic electrical contacts must be maintained throughout the battery. At the same time, the seal must be substantially corrosion resistive as common electrolytes are generally corrosive. Various constructions consisting of the combination of a plastic seal and a metal top have been proposed. However, they do not provide satisfactory moisture sealing and are rather complicated in structure.

Hence, it will be beneficial if batteries or battery cells with improved sealing which can overcome the above problems can be provided to provide an extended shelf life. In this connection, it should be appreciated that many standard dry cells are of a standard size and such improvements must be provided within the constraints of the standard sizes of the batteries. Preferably, the making of batteries with the improved sealings should not be unduly complicated or require tedious manufacturing procedures or adaptations.

### OBJECT OF THE INVENTION

Hence, it is an object of the present invention to provide batteries or unit cells of batteries with improved sealing means and/or sealing characteristics so that batteries having an improved shelf life can be provided. It is also an object of the present invention to provide improved batteries or battery cells with enhanced sealing methods or means which are relatively simple to make so that batteries conforming to the standard battery sizes can be manufactured without undue and additional complexity. At a minimum, it is an object of the invention to provide the public with a choice of batteries with a sealing means or method.

### SUMMARY OF THE INVENTION

Broadly speaking, the present invention provides an improved battery cell including a first electrode having a top surface and a bottom surface, a second electrode having a top surface and a bottom surface, an insulating separator separating said first electrode and said second electrode, an electrolyte supporting ion conductivity between said first and said second electrodes, said first electrode and said second electrode being stacked together so that the bottom surface of said first electrode is stacked adjacent to the top surface of said second electrode; said first electrode, said second electrode, said separator and an electrolyte being held together by a receptacle, said top surface of said first electrode being substantially covered by a conductive and non-porous layer made of a material which is generally corrosion resistant to the electrolyte.

Preferably, said layer being a sheet made of a flexible polymer and dispersed with conductive particles which are generally corrosion resistant to the electrolyte.

Preferably, said first electrode is in tablet form, and said conductive and non-porous polymer sheet covering the top surface of said first electrode being a thermo-plastic rubber sheet dispersed with conductive particles.

In another aspect, the present invention provides a battery including a plurality of unit cells of the above-describe.

More specifically, the present invention provides a battery including a plurality of unit cells in which a conductive polymer film or member, such as thermo-plastic rubber sheet dispersed with particles of carbon or acetylene black, is used to provide conductive sealing to alleviate loss of moisture of the electrolyte.

### BRIEF DESCRIPTION OF THE DRAWINGS

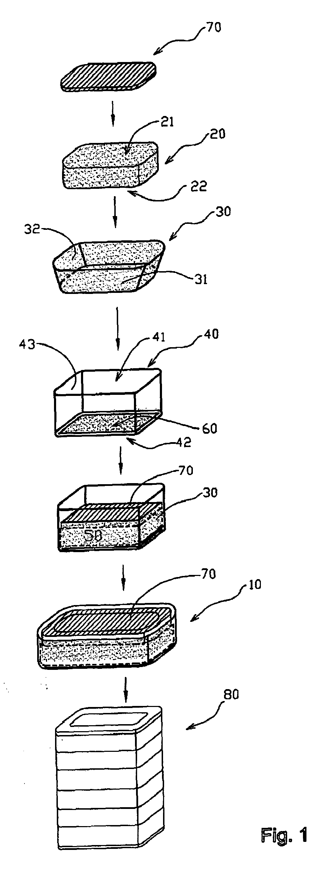

A preferred embodiment of the present invention will be explained by way of example and with reference to the accompanying drawings, in which:-
Fig. 1 shows the series of steps of forming a battery cell having a multi-layered structure and subsequently forming a standard sized 9-volt battery comprising a plurality of stacked together battery cells thus formed.

### DETAILED DESCRIPTION OF THE PREFERRED EMBODIMENTS

In the specification below, a preferred example of the present invention will be explained by reference to a standard-sized 9-volt battery comprising six unit cells of about 1.5 volt each. Each of the unit cells **10** has a multi-layered tablet structure including a first (positive) electrode **20**, a separator **30** and a receptacle **40** receiving a second (negative) electrode **60** and the sub-assembly **50** of the first (positive) electrode and the separator and a second (negative) electrode. The separator **30** is generally made of an absorbent material and is soaked with an electrolyte to provide ion conductivity between the first **20** and the second **60** electrodes to generate a voltage difference for stored energy output. The first or positive electrode **20** is made into a tablet form with a top **21** and a bottom surface **22**.

This first positive electrode **20** is formed by compressing or stamping a positive electrode composition which, in the present embodiment, includes a positive active material of manganese dioxide powder, an electro-conductive material and a binding agent. The electro-conductive material can, for example, be a composition including acetylene black. Other electro-conductive materials, such as graphite, carbon black, plumbago and nickel powder or the like may also be used where appropriate. The binding agent is added to the positive electrode composition to strengthen the tablet structure and integrity. Commonly available binding agents such as agar, poly-vinyl alcohol, carboxymethylcellulose, polytetrafluoroethylene, methylcellulose and the like may be appropriately used for the positive electrode composition in an appropriate manner known in the trade.

The positive electrode compositions can be moulded and compressed to a pre-defined tablet shape. This positive electrode tablet **20** is then placed into the separator **30** which is formed into the shape of a paper cup having a bottom surface **31**, a surrounding wall **32** extending upwards from the bottom surface and a top aperture. The paper cup can **30**, for example, be made from starched paper or other liquid absorptive insulating fabrics. The sub-assembly of the manganese dioxide positive electrode tablet **20** and the paper cup separator **30** is then inserted into a receptacle **40.**

The receptacle is generally a rectangular casing with a top aperture **41**, a bottom aperture **42** and a surrounding wall **43**. The receptacle **40** is generally shaped to receive the tablet sub-assembly **50** and the second or negative electrode **60** in a closely fitted manner through the top aperture **41.** The bottom aperture is generally smaller than the top aperture and includes an inwardly extending flange to retain the second or negative electrode **60** and the tablet sub-assembly **50** within the receptacle. The second or negative electrode **60** in the present embodiment is a zinc plate with a top surface and a bottom surface.

This negative zinc electrode **60** is placed with its top surface facing upward and bottom surface juxtaposing the lower aperture **41** of the receptacle **40.** This zinc electrode is dimensioned and shaped so that it can be retained by the inwardly extending flanges of the lower aperture **41** of the receptacle **40.**

The positive electrode tablet sub-assembly **50** is then inserted into the receptacle after the zinc negative electrode **60** has been inserted in the aforementioned manner. This positive electrode tablet sub-assembly **50** is placed inside the receptacle **40** by inserting the sub-assembly **50** with the bottom surface **31** of the starched paper cup towards the upper surface of the zinc plate **60**. After the positive electrode tablet sub-assembly **50** has been placed on top of the zinc plate electrode **60,** a further conductive and non-porous layer which may be a film, a membrane, a deposit or a foil member **70** is placed on the top surface of the positive electrode sub-assembly, thereby generally or substantially covering the top surface of the manganese dioxide tablet. After the conductive member **70,** the positive electrode sub-assembly **50** comprising the manganese dioxide tablet **20** and the paper cup separator **30** and the negative zinc electrode **60** have been placed within the receptacle, the overall sub-assembly is then packed together by subjecting the receptacle to a packaging process.

This packaging process may include pressing together the individual components and then subject the receptacle to a reasonably high temperature plastic pressing for packing together the constituting members. In the present embodiment, the receptacle is made of a thermo-plastic or poly-vinyl chloride ("PVC") and a retaining packaging can be formed by subjecting the PVC receptacle to a reasonably high temperature and then by pressing the elevated portion of the upstanding wall towards the top surface of the tablet. Since the surrounding wall of the PVC receptacle is generally higher than the combined thickness of the constituting members so that a portion of the surrounding wall is still elevated above the top surface of the conductive foil when all the constituting members are placed within the receptacle, the remaining upstanding portion of the wall can form sealing lips around the conductive member **70**. Thus, when the receptacle **40** is subjected to the packaging process, the remaining portion of the upstanding wall will be pressed onto the top surface of the conductive foil and forming sealing lips. As a result, a sealed capsule enclosing the constituting members is formed.

The conductive layer, member or foil covering the first electrode, which is the manganese dioxide tablet in this example, is preferably a polymer which is conductive, corrosion resistant to the electrolyte and non-porous so that it is generally not permeable to air and moisture. By including this non-porous, conductive and corrosion resistant layer or foil on top of the manganese dioxide tablet and with the further lip sealing by the surrounding wall of the PVC receptacle 40, the electrolyte will be better preserved and retained, thereby providing a longer shelf life for the batteries.

Turning now to the conductive polymer film which can be used in the present invention, an appropriate polymer film must be non-porous so that it is substantially non-permeable to air and moisture to avoid adverse loss of the electrolyte. At the same time, since this polymer film covers the top surface of the manganese dioxide tablet and is placed intermediate the unit cell and the next unit cell or the contact terminals of the battery, it must be conductive enough to provide a low ohmic electrical path for electrical connection. To overcome this problem, an electrically conductive polymer is utilized. Furthermore, such should be resistant to the corrosive nature of the electrolyte in a battery cell to maintain its lack of porosity.

It is known that polymers, including crystalline polymers, natural rubbers and other elastomers, can be made electrically conductive by dispersing a suitable amount of finely divided conductive fillers. A general background survey of such conductive elastomers can be found in "Conductive Rubbers and Plastics" by R.H. Norman, published in 1970 by EL-sevier Publishing Co.

Suitable conductive fillers include acetylene black, graphite and carbon black. In the present preferred embodiment, the conductive foil is made of a thermo-plastic rubber dispersed with a suitable density of acetylene black in order to make it conductive while retaining the non-porous nature and elastic characteristics. Of course, it is known that carbon black, acetylene black and graphite are corrosion resistive. The thermo-plastic rubber conductive foil or membrane used in the present preferred embodiment preferably has a thickness of between 0.1 mm - 0.3 mm so that the overall thickness of the unit cells are not significantly increased. Furthermore, the preferred conductive thermo-plastic rubber sheet would have a resistivity of less than 0.25 Ω/cm². This preferred conductive foil has a weight per unit area of about 400 g/m². A further example of a suitable conductive thermo-plastic rubber sheet which can be used in the present invention can be procured from the German company, Nikolas Branz Co. of Germany or a Hong Kong company known as Gold Won Electrical Chemical Co. Ltd.

By the formation of unit cells having improved sealing characteristics by utilizing a thermo-plastic rubber sheet for covering the otherwise exposed top surface of the manganese dioxide tablet, leakage of moisture, especially from the electrolyte, from the unit cell can be substantially alleviated, thereby extending the shelf life and operation life of a battery. After the unit cells have been assembled, the unit cells are stacked together and formed a multi-cell sub-assembly 80. This multi-cell sub-assembly is placed into an outer housing for connecting to the external battery terminals in the usual way.

While the present invention has been explained by reference to the preferred embodiment described above, it will be appreciated that the embodiment is only an example provided to illustrate the present invention and is not meant to be restrictive on the scope and spirit of the present invention. This invention should be determined from the general principles and spirit of the invention as described above. In particular, variations or modifications which are obvious or trivial to persons skilled in the art, as well as improvements made on the basis of the present invention, should be considered as falling within the scope and boundary of the present invention. Furthermore, while the present invention has been explained by reference to a battery cell with a manganese dioxide tablet electrode and a zinc electrode, it should be appreciated that the invention can apply, whether with or without modification, to batteries of other electrode compositions or structures with loss of generality. In addition, while an example of a thermo-plastic rubber sheet dispersed with acetylene black has been used to explain some features of the present invention, it should be understood that generally, other appropriate polymers dispersed with appropriate conductive fillers of a suitable quantity, such as carbon black, graphite and the like can be used in appropriate combinations without loss of generality.

## Claims

1. An improved battery cell including a first electrode having a top surface and a bottom surface, a second electrode having a top surface and a bottom surface, an insulating separator separating said first electrode and said second electrode, an electrolyte supporting ion conductivity between said first and said second electrodes, said first electrode and said second electrode being stacked together so that the bottom surface of said first electrode is stacked adjacent to the top surface of said second electrode; said first electrode, said second electrode, said separator and an electrolyte being held together by a receptacle, said top surface of said first electrode being substantially covered by a conductive and non-porous layer made of a material which is generally corrosion resistant to the electrolyte.

2. A battery according to claim 1, wherein said layer being a sheet made of a flexible polymer and dispersed with conductive particles which are generally corrosion resistant to the electrolyte.

3. A battery according to claim 2, wherein said first electrode is in tablet form, and said conductive and non-porous polymer sheet covering the top surface of said first electrode being a thermo-plastic rubber sheet dispersed with conductive particles.

4. A battery according to claims 2 or 3, wherein said conductive particles include carbon or acetylene black.

5. A battery according to claims 2 or 3, wherein said receptacle is made of polyvinyl chloride with a upstanding wall extending the combined thickness of the first tablet electrode, the separator and the second electrode, said receptacle is heat treated to form a package holding said first table electrode, said separator and said second electrode.

6. A battery according to any of claims 1, 2 or 3, wherein said conductive and non-porous layer has a thickness between 0.1 mm and 0.3 mm.

7. A battery according to any of the claims 2 or 3, wherein said conductive and non-porous polymer sheet having a resistivity of less than 0.25 Ω/cm² and a thickness between 0.1 mm and 0.3 mm.

8. A battery according to any of the claims 1, 2 or 3, wherein said first electrode is a tablet containing a manganese dioxide composition, said second electrode includes a zinc plate.

9. A battery according to any of claims 1, 2 or 3, wherein said separator includes a cup-shaped member formed substantially from a starched paper.

10. A battery according to claims 1, 2 or 3, wherein said receptacle is a generally cup-shaped member made from polyvinyl chloride (PVC).

11. A battery including a plurality of cells of any of claims 1 to 5 stacked together, connected in series and enclosed with an outer housing.
